# EUROPEAN PATENT APPLICATION

(11) **EP 4 711 950 A1**
(43) Date of publication of application: **18.03.2026**
(21) Application number: 24199778.2
(22) Date of filing: 11.09.2024
(51) Int. Cl.: G06F 16/334, G06F 16/532

(54) **MULTIMODAL SPARE PART IDENTIFICATION**

(71) Applicant: Siemens Aktiengesellschaft, 80333 München (DE)
(72) Inventor: Geipel, Markus Michael, 81739 München (DE); Klose, Andreas, 92260 Ammerthal (DE); Krubasik, Edward Cornelius, 80809 München (DE); Ott, Joachim, 92224 Amberg (DE); Pol, Sebastian, 90556 Seukendorf (DE); Reitinger, Axel, 81377 München (DE)
(74) Representative: Siemens Patent Attorneys

(57) **Abstract**

The invention relates to a computer-implemented method, a computer-implemented device, a system and a computer program product for mapping a real-world part to a model in a catalogue comprising receiving, by a multimodal large language model, LLM, a query for mapping the part to the model, wherein the request comprises a text and/or a voice sequence and/or an image associated with the part, transforming, by the multimodal LLM, the received query to a textual description of the part, identifying, based on the textual description, a model in the catalogue onto which the part may be mapped, wherein the identifying comprises comparing the textual description with a respective textual description of the models in the catalogue;
providing information associated with the identified model to a user of the computer-implemented method

## Description

The present invention relates to a computer-implemented method, a computer-implemented device, a system and a computer program product for mapping a real-world part to a model in a catalogue.

Large industrial facilities may comprise a plurality of different manufacturing lines and apparatuses that are each made of a plurality of individual parts. Each of the manufacturing lines and/or apparatuses may undergo regular maintenance and/or need repair in case one or even more of the individual parts exhibit a faulty behavior.

In case a failure occurs, a production line may not be operational anymore which may lead to immense efficiency losses and thus to immense financial losses. Therefore, a quick identification of the faulty part that may have caused the failure may be seen as highly important.

As soon as the faulty part is identified, the respective part needs to be mapped onto a storage of replacement parts to identify a respective part that may be used to replace the faulty part.

However, in some cases, many parts of an apparatus of a production line may look similar to each other which may make it difficult to clearly distinguish the respective parts from each other and which may render it difficult to determine a respective replacement part from the storage of the industrial facility.

Moreover, some of the parts are named according to (non-intuitive) naming conventions which may also make it difficult to distinguish these parts from each other.

This aspect gains even higher relevance if the industrial facility has a rather high fluctuation the members of the responsible staff and/or if staff members do not have a respective level of experience (yet) to immediately identify a replacement part from a storage.

As a result, trial and error-based attempts may follow to determine a suitable replacement part. This may be accompanied by the drawback of extending the interruption of the manufacturing line which may be associated with respectively high costs.

This aspect may at least in part be improved if a database (and/or a table) is provided that comprises information associated the respective spare parts, based on which a mechanic of the industrial facility may search for the respective part by name or by machine. However, also such an approach may in many cases be seen as disadvantageous as the precise name of the part may not always be known and since an apparatus to be repaired may comprise a plurality of parts, identifying a respective part may be cumbersome as a mechanic may be required to browse through a large number of different parts.

Some databases used for cataloging respective spare parts may be based on the identification of pictures of the parts. However, if parts look alike, a picture-based identification may not always be possible as the comparison of respective images may be ambiguous.

In some cases, these databases (picture-based or text-based) may rely on machine learning concepts wherein a trained machine-learned model may be used to quickly identify a spare part. However, these machine-learned model-based approaches oftentimes suffer from the drawback that they are difficult to administrate and/or difficult to extend. Moreover, they may require extensive training prior to their final implementation.

Therefore, there is a need to further improve the identification of spare parts from a storage.

Thus, the objective technical problem of the present application can be seen in providing an efficient means for unambiguously determining a replacement part in a storage.

This is met by a first aspect which is directed to a computer-implemented method for mapping a real-world part to a model in a catalogue. The computer-implemented method may comprise receiving, by a multimodal large language model, LLM, a query for mapping the part to the model, wherein the request comprises a text and an image and/or a vocal sequence associated with the part and transforming, by the multimodal LLM, the received query to a textual description of the part. Moreover, the computer-implemented method may comprise identifying, based on the textual description, a model in the catalogue, onto which the part may be mapped, wherein the identifying compromises comparing the textual description with a respective textual description of the models in the catalogue and providing information associated with the identified model to a user of the computer-implemented method.

A catalogue may refer to an entity that comprises information on spare parts (e.g., in a storage) which may be used to replace the respective real-world part when deemed necessary. The catalogue may be provided as a database system that maps onto a storage facility which storage facility comprises the respective spare parts.

The text comprised by the query may, e.g., refer to a description of the part, e.g., describing how the part looks like, a description of the dimensions of the part, reference to the machine to which the part belongs, a part-number and/or a model number of the part.

The aforementioned textual description may be based on a voice sequence such as, e.g., a spoken sequence in which a description of the part is recorded.

An image of the part may, e.g., refer to a picture/photograph of the part. In some cases, more than one image may be provided wherein each image may show the part from a different perspective/angle and/or under different light conditions. In some cases, also a video may be provided which shows the part from different perspectives/angles. In some cases, the image may be a black and white image. In alternative cases, the image may be a color image. In some cases, if more than one image is provided, at least once of the images may be a black and white image whereas the remaining images are provided as color images.

An association may be referred to as any reference to the respective part (e.g., being related to the part, depicting the part as such, etc.).

A multimodal Large Language Model (LLM) may be referred to as an artificial intelligence algorithm that utilizes deep learning techniques and large datasets to process and synthesize information from multiple input modalities. The model employs the transformer architecture to seamlessly integrate text, images, and audio, resulting in enhanced generation and interpretation of responses. This technology can be applied in various fields, including medical image processing, autonomous driving, and intelligent document processing, by combining visual, auditory, and textual information to deliver more accurate and context-aware results.

In some cases, there may be no model comprised by the catalogue that may be identical to the real-world part. In such a case, a similarity measure may be taken into account such that the identifying relates to an identifying of a model, wherein the textual description of said model at least lies close to the description of the real-world part.

The providing may comprise providing the information associated with the identified model to the user by means of a user interface (such as, e.g., on a screen, on a tablet, as a message (e.g., an e-mail, a push-notification, etc.), etc.).

Based thereon a multimodal LLM-based identifying procedure may be provided that takes several types of input into account when mapping the real-world part to the model in the catalogue. This may allow a faster and more accurate identifying of a respective model in the catalogue. What is more, a more robust identifying of the model in the catalogue may be facilitated. This aspect may in particular be promoted due to the aspect that the multimodal LLM takes text information and visual information and/or speech information into account. Therefore, both text and image information may be used for the identifying. This may enable the system to explicitly ignore irrelevant aspects of the images, such as light conditions, background, color (if applicable), etc. Even further, the multimodal LLM does not require extensive training data as it leverages the one- or zero-shot learning capabilities of LLMs. Zero-shot learning may allow LLMs to perform tasks or classify instances for which they have not seen specific examples during training whereas one-shot learning refers to the ability of an LLM to learn a new task or class with just a single training example.

According to an embodiment, the transforming may further comprise transforming the query, by an embedding LLM, into a vector representation of the query.

An embedding in an LLM may be referred to as a method of transforming discrete input data, such as words or phrases, into continuous vector representations within a high-dimensional space. These embeddings may capture the semantic meaning and relationships between the data elements, enabling the model to effectively process and understand context and nuances. By employing dense vector representations, embeddings allow semantically similar inputs to be positioned closer together, facilitating enhanced natural language processing capabilities. This transformation may be integral to the architecture of LLMs, improving their ability to perform tasks such as text classification, sentiment analysis, and machine translation by converting raw data into a format suitable for processing by neural networks.

Due to the vector representation, the query may be converted into a machine-readable and machine-processible format such that an (automized) identifying by respective algorithms may be facilitated.

According to a further embodiment, the models in the catalogue may be represented by entries in a vector database representation and wherein the identifying comprises a k-Nearest Neighbors, kNN, search in the vector database.

The kNN algorithm may be referred to as a non-parametric, supervised learning classifier that utilizes the concept of proximity to make predictions or classifications about the grouping of individual data points. This algorithm may operate by identifying the 'k' closest data points (neighbors) in a feature space to a given query point and assigning the query point to the class most common among its 'k' nearest neighbors. KNN is applicable to both classification and regression problems. The algorithm does not require an explicit training phase, as it stores all available data and classifies new instances based on a majority vote of its neighbors. Distance metrics, such as Euclidean distance, may be employed to determine the closeness of data points.

According to a further embodiment, the identifying may comprise identifying a number N, with N ≥ 1, of entries in the vector database based on a similarity score indicative of a similarity of the part and a respective model that exceeds a predetermined threshold.

In some cases, the similarity score may be provided as a distance metric in a vector space as calculated as part of the KNN, wherein the distance metric may indicate a distance between a vector associated with the transformed textual information and one or more vectors associated with respective models of the catalogue. As an alternative or as an addition to the distance metric, a cosine similarity may be used to measure a similarity between two non-zero vectors in the vector database. The cosine similarity may be obtained by computing the dot product of the respective two vectors, divided by their lengths. That is, the cosine similarity may thus not depend on the magnitudes of the vectors but only on their angles. The calculation of the cosine similarity may in particular provide a higher explanatory power in case of higher dimensional spaces as compared to distance metrics.

The predetermined threshold for the similarity score may be inverse-proportional to a distance as provided by the KNN. That is, the respective real-world part may be considered to be more similar to a model of the catalogue if the distance is smaller as compared to a real-world part that is considered to be less similar to a model of the catalogue with a distance that is larger.

By considering a respective similarity score as part of the identifying, a quantitative measure may be introduced based on which a model may be selected from the catalogue. Therefore, a comprehensible, deterministic and adjustable (e.g., by means of a definition of the predetermined threshold) identifying may be facilitated. This may further allow a definition of the number of models of the catalogue that may be provided to the user as part of the identifying.

According to a further embodiment, the vector database may comprise key-data pairs, wherein each data is associated with a model description for a model in the catalogue and wherein the respective key is a textual description of the model in the catalogue.

In some cases, the KNN may be based on retrieving a key from the vector database that minimizes a (metric) distance to a vector representation of the query associated with the real-world part to be identified.

By providing references to the models in the catalogue as key-data pairs, an efficient machine-processible identifying of models in the catalogue for which a distance between the key of a respective key-data pair and a corresponding textual query of the real-world part is minimized, may be provided. This may support a fast and computation efficient identifying of a model in a catalogue.

According to a further embodiment, the identifying may comprise searching a key in the vector database that is equal to and/or similar to the transformed query.

If the identifying requires that the key in the vector database is equal to the textual description of the part, the (metric) distance associated with the transformed query in the vector space and the key is zero. If the key is similar to the textual description, the distance associated with the transformed query and the key is below a (predefined) (metric) distance threshold.

This may allow a user defined definition of the models that are to be identified as part of the mapping. That is, by requiring that the key needs to be equal to the transformed query, a more stringent identifying may be implied whereas, if a similarity is sufficient, a broader search in the vector database may be performed and more models in the catalogue may be identified as potential mapping partners for the real-world part.

According to a further embodiment, the catalogue may comprise a description of each of the models in the catalogue and/or a manual for each of the models in the catalogue.

The description and/or the manual may be taken into account when determining a respective key of a key-data pair for each of the models in the catalogue.

The manual may comprise information on how to handle a respective model the manual is directed to, in which apparatus it may be inserted (and how), dimension information, weight information, order numbers related to the manufacturer of the respective model, etc.

The manual may be referred to as metainformation associated with a model in the catalogue.

By taking this metainformation into account, a more robust and accurate identifying of a model in the catalogue may be facilitated that may be seen as a most similar mapping partner for the real-world part.

According to a further embodiment, the computer-implemented method may further comprise requesting further information from the user if no model can be identified in the catalogue and/or if the identified model is associated with a similarity score that is below a predefined threshold, wherein the similarity score is indicative of a similarity of the part and a respective model in the catalogue.

The request for further information may comprise providing the user of the computer-implemented method with a question tailored to the retrieval of the further information.

As a result, a customization of the query may be obtained and a more robust identifying (and thus a more robust mapping of the real-world part to a model in the catalogue) may be facilitated. Moreover, since a tailored request for further information may be facilitated, a number of successful queries (i.e., the number of queries for which a mapping may be successful) may efficiently be improved. Therefore, the efficiency of a respective mapping may advantageously be improved.

According to a further embodiment, the requesting may further comprise providing a multimodal LLM-based dialogue system to the user, wherein the LLM-based dialogue system is configured to provide part-related questions to the user to obtain further information from the user to describe the part and requesting the further information by means of the multimodal LLM-based dialogue system.

The request of further information may comprise an initiation of a dialogue between a unit that implements the computer-implemented method as described herein and a user of the computer-implemented method. The request of further information may be configured such that tailored information may be requested from the user that may advantageously be used to improve the accuracy of the identifying, e.g., by suppressing any ambiguity that may still be persistent in the identifying (e.g., if two models A and B are identified in the catalogue wherein model A is for an apparatus that has been built before the year 2020 and wherein model B is for an apparatus that has been built in 2020 or after the year 2020, the request for further information may comprise providing the user with a question directed to the manufacturing year of the respective apparatus with which the desired model is associated with).

As a result, a customization of the query may be obtained and a more robust identifying (and thus a more robust mapping of the real-world part to a model in the catalogue) may be facilitated.

According to a further embodiment, the transforming may further comprise accessing a manual of the part and/or of an apparatus which comprises the part and deriving further information from the manual which is indicative of a description of the part. Moreover, the computer-implemented method may comprise adding the derived further information to the textual description of the part.

As a result, the information associated with the transformed query may be augmented with additional contextual (e.g., meta-) information, e.g., by providing a part list of parts comprised by the apparatus. This may allow a limitation of the mapping of the real-world part to a model of the catalogue to those parts only that are indeed part of the respective apparatus. Based thereon, the robustness of the mapping may additionally be improved.

According to a further embodiment, the providing may further comprise providing a link to the catalogue to the identified model and/or providing metainformation for the identified model.

Providing a link to the catalogue may comprise a link to a (digital) product sheet of the respective model. A user may thus be provided with additional context information (e.g., metainformation) related to the identified model (such as, e.g., a picture of the model in the catalogue, pricing, a manual, a reference to a storage place from which the model may be obtained as a replacement part if deemed necessary, etc.). The link may be provided as a link in an intranet of the production facility.

Based thereon, the usability and user experience of the computer-implemented method as described herein may efficiently be improved and the underlying workflow may advantageously be improved.

According to a second aspect, a computer program product is suggested. The computer program product comprises instructions which, when the computer program product is executed by a computer, causes the computer to carry out the steps of the method as described herein.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, a computer-implemented device for mapping a real-world part to a model in a catalogue is suggested. The computer-implemented device may comprise a receiving unit for receiving, by a multimodal large language model, LLM, a query for mapping the part to the model, wherein the request comprises a text and an image and/or a vocal sequence associated with the part and a transforming unit for transforming, by the multimodal LLM, the received query to a textual description of the part. Moreover, the computer-implemented device may comprise an identifying unit for identifying, based on the textual description, a model in the catalogue, onto which the model may be mapped, wherein the identifying comprises comparing the textual description with a respective textual description of the models in the catalogue and a providing unit for providing the identified model to a user.

The respective unit, i.e. the receiving unit, the transforming unit, the identifying unit and/or the providing unit, may be implemented in hardware and/or in software. If said unit is implemented in hardware, it may be embodied as a device, e.g. as a computer or as a processor or as a part of a system, e.g. a computer system. If said unit is implemented in software it may be embodied as a computer program product, as a function, as a routine, as a program code or as an executable object.

In some cases, the respective units may be part of a centralized device. Alternatively, at least one of the units may be deployed in a remote facility (e.g., the identifying unit may be part of database system that may be implemented at a facility that is geographically separated from the remaining aforementioned units).

The computer-implemented device may further comprise an execution unit for carrying out the steps of the method as described herein and/or a further execution unit for carrying out the computer program product as described herein.

The execution unit may, e.g., be provided as a processor, a field programmable gate array (FPGA) and/or a combination thereof.

According to a fourth aspect, a system for mapping a part to a model in a catalogue is suggested. It may comprise the computer-implemented device as described herein, and the computer program product as described herein.

The computer program product may be contained within the computer-implemented device. In alternative examples, the computer program may be contained in a unit located remotely from the computer-implemented device. In the latter exemplary case, the computer-implemented device may access the computer program product via a network (e.g., a local area network or the Internet) or a USB connection.

The embodiments and features described with reference to the apparatus of the present invention apply mutatis mutandis to the method of the present invention.

It is emphasized that even though aspects of the present invention may be described as (isolated) embodiments herein, the respective embodiments may also be combined with each other. That is, any embodiment of the first, second, third and/or fourth aspect may be combined with any embodiment of the first, second, third and/or fourth aspect to obtain another embodiment of the first, second, third and/or fourth aspect.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a system overview;
Fig. 2 shows a computer-implemented method;
Fig. 3 shows a computer-implemented device; and
Fig. 4 shows a system.

In the Figures, like reference numerals designate like or functionally equivalent elements, unless otherwise indicated.

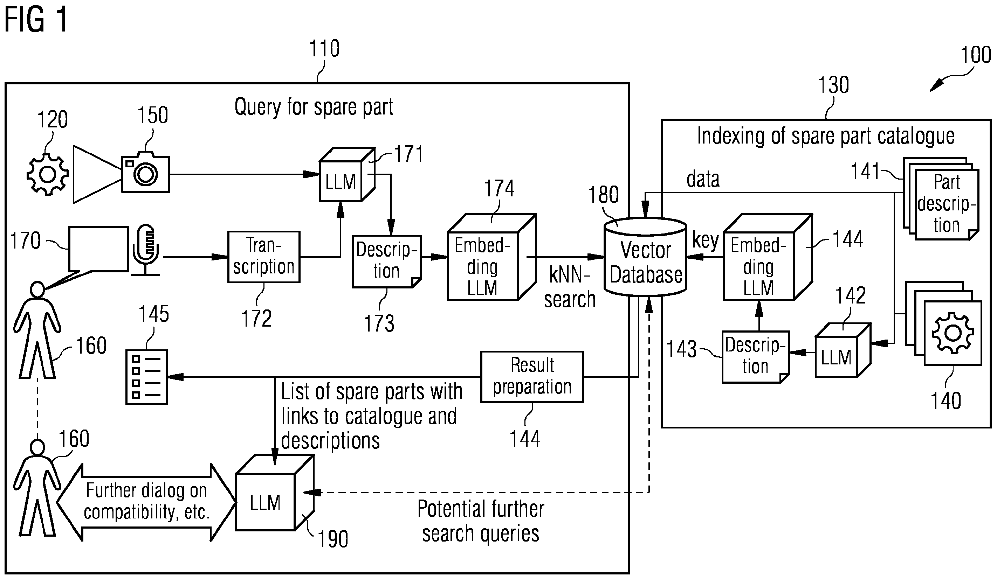

Fig. 1 shows a system overview 100 of a mapping of a real-world part 120 to a model 140 of a catalogue 130.

The system is made up from a query 110 for mapping a real-world part 120 to a model 140 in the catalogue 130.

An image 150 (e.g., a picture) of the part 120 may be provided, e.g., by a user 160 of the system 100, to an LLM 171. The image 150 may, e.g., be provided as an image from a tablet and/or a mobile phone of the user 160. In some cases, the image 150 may be provided as an image taken in a photo station wherein the photo station may be a static or portable facility in a production facility at which the respective part 120 may be placed to take a picture thereof. In some cases, more than one image 150 may be provided to the LLM 171.

Additionally or alternatively, a vocal sequence 170 (e.g., a voice recording) may be provided by the user 160. The vocal sequence 170 may undergo a transcription 172 based on which the vocal sequence 170 may be transferred from audio to text, i.e., the vocal sequence which may comprise a spoken sequence by the user 160 may be transformed into a textual sequence. The textual sequence may be provided to the LLM 171.

LLM 171 may be configured to transform both the received image 150 and the transcribed vocal sequence 170 into a common description 173 of the part 120. The transform may comprise a description of the image 150, that is, the LLM 171 may transform the received image 150 into a textual description of what is depicted in the received image 150.

The description 173 may be passed onwards to embedding LLM 174. The embedding LLM 174 may transform the description 173 into a vector representation.

A vector representation in the context of an LLM may refer to a mathematical transformation that converts discrete text elements, such as words or sentences, into continuous numerical vectors within a high-dimensional space. These vectors serve as coordinates that capture the semantic meaning and relationships between the text elements, allowing for the computation of semantic distances. This transformation is essential for enabling computers to process and understand natural language, as it positions semantically similar elements closer together in the vector space. This facilitates various natural language processing tasks, including semantic search, text classification, and machine translation.

The vector representation as provided by the embedding LLM 174 may subsequently be used to perform a k-Nearest Neighbors (kNN) search in a vector database 180 based on the vector representation.

The integration of the kNN algorithm with an embedded Large Language Model (LLM) may enable enhanced processing and analysis of natural language data. This application leverages the dense vector embeddings generated by the LLM, which capture the semantic meaning and relationships of text elements, to perform various tasks:
Semantic Similarity Search: kNN may utilize the vector embeddings to conduct similarity searches, identifying text elements that are semantically closest to a given query. This is particularly beneficial for information retrieval applications, where the objective is to locate documents or text passages most relevant to a user's query.

Classification and Clustering: The embeddings serve as feature vectors for kNN classification, allowing the model to assign new text inputs to categories based on their proximity to labeled examples within the embedding space. This approach is effective for tasks such as sentiment analysis and topic classification.

Recommendation Systems: By identifying the nearest neighbors of a specific item in the embedding space, kNN can recommend similar items or content, enhancing user experience in recommendation systems by suggesting items likely to be of interest based on semantic similarity.

Dimensionality Reduction: To improve computational efficiency, dimensionality reduction techniques, such as Principal Component Analysis (PCA), can be applied to the embeddings, facilitating more efficient kNN computations without significant loss of semantic information. This integration of kNN with embedded LLMs allows for the exploitation of rich semantic representations provided by the LLM while utilizing the straightforward and effective nature of the kNN algorithm, thereby enhancing the capability and accuracy of machine learning tasks.

In other words, the kNN search may be used to retrieve an entry in the vector database 180 that has a smallest (metric) distance to the vector as output by the embedding LLM 174 based on which the kNN is performed.

The vector database 180 may comprise N, with N ≥ 1, key-data pairs which are the result of an indexing of a model catalogue. In some cases, a model may act as a spare part for, e.g., an apparatus of an industrial facility.

The indexing may be carried out once when the catalogue is initially set up. Additionally or alternatively, the indexing may be executed on a regular basis (e.g., in predetermined time intervals such as once a day, once a week, once a month and/or once a year). Additionally or alternatively, the indexing may be carried out each time a new model is added to the catalogue.

The data of a key-data pair may be derived from a model description 141. The model description 141 may be referred to as a description of the characteristics of the respective model. The description may be analog to the output of the embedding LLM 174 as described above. Moreover, the data may comprise information retrieved from a manual 140 (e.g., certain pages of the manual 140) of some or each of the models.

The respective key of a key-data pair may be obtained by providing the part description 141 (and optionally) and the manual 140 to a respective LLM 142. The respective LLM may combine the part description 141 and the manual (or information sequences of the manual 140).

The result, i.e., the output of the LLM 142 may be a description 143 which is of purely textual nature.

The description 143 may further be passed to an embedding LLM 144. Embedding LLM 144 may be configured to transform the description 143 into a respective vector representation (in analogy to the embedding LLM 174).

The vector representation may act as a key of a respective key-data pair as comprised by the vector database 180.

In case at least one key-data pair is identified by the kNN search (i.e., a model is identified in the catalogue), the respective identified model is provided to the user 160.

The providing may comprise a result preparation 144 which may comprise providing a link to the respective model in the catalogue, retrieving image data associated with the model to be provided to the user 160 and/or providing any other desired background (e.g., meta-) information to the user 160 which is associated with the identified model.

As a result, a list of models with links to the catalogue 130 and respective descriptions may be provided 145 to the user 160.

In some cases, a dialogue may be initiated between the user 160 and the vector database 180 by means of an LLM 190. The dialogue may set the basis for further queries. The dialogue may be based on a chatbot.

Each of the LLMs mentioned herein may, e.g., be implemented as a GPT model, a Llama model, a Mistral model and/or any other suitable LLM. Each of the LLMs described herein may be used as an OEM version. In some cases, at least some of the LLMs may undergo a further specific training (finetuning) to adapt the LLM to the circumstantial needs of the production facility at which the LLM may be deployed.

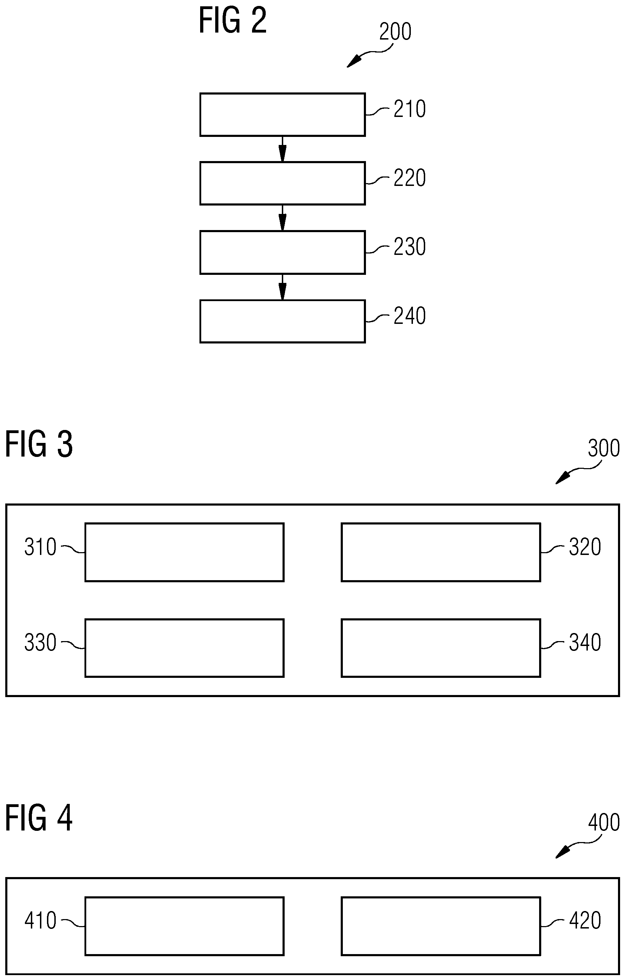

Fig. 2 shows a flowchart of a computer-implemented method 200 for mapping a real-world part to a model in a catalogue.

In step 210, a query for mapping the part to the model is received by a multimodal large language model, LLM, wherein the request comprises a text and/or a voice sequence and/or an image associated with the part.

In step 220 the received query is transformed, by the multimodal LLM, to a textual description of the part.

In step 230, a model in the catalogue is identified, based on the textual description, onto which the part may be mapped, wherein the identifying compromises comparing the textual description with a respective textual description of the models in the catalogue.

In step 240, information associated with the identified model is provided to a user.

Fig. 3 shows a computer-implemented device 300 for mapping a real-world part to a model in a catalogue. The computer-implemented device 300 comprises a receiving unit 310, a transforming unit 320, an identifying unit 330 and a providing unit 340.

The receiving unit 310 may be configured for receiving, by a multimodal large language model, LLM, a query for mapping the part to the model, wherein the request comprises a text and/or a voice sequence and/or an image associated with the part.

The transforming unit 320 may be configured for transforming, by the multimodal LLM, the received query to a textual description of the part.

The identifying unit 330 may be configured for identifying, based on the textual description, a model in the catalogue onto which the part may be mapped, wherein the identifying comprises comparing the textual description with a respective textual description of the models in the catalogue.

The providing unit 340 may be configured for providing information associated with the identified model to a user.

Fig. 4 shows a system 400 for mapping a real-world part to a model in a catalogue. The system 400 comprises a computer-implemented device 410 and a computer program product 420.

The computer-implemented device 410 may be configured as described elsewhere herein.

The computer program product 420 may be configured as described elsewhere herein.

Although the present invention has been described in accordance with preferred embodiments, it is obvious for the person skilled in the art that modifications are possible in all embodiments. Independent of the grammatical term usage, individuals with male, female or other gender identities are included within the term.

### List of Reference

- 100: system overview
- 110: query for mapping a real-world part to a model of a catalogue
- 120: real-world part
- 130: catalogue
- 140: model
- 141: model description
- 142: LLM
- 143: description
- 144: embedding LLM
- 150: image
- 160: user
- 170: vocalsequence
- 171: LLM
- 172: transcription
- 173: description
- 174: embedding LLM
- 180: vector database
- 190: LLM
- 200: computer-implemented method
- 210: step
- 220: step
- 230: step
- 240: step
- 300: computer-implemented device
- 310: receiving unit
- 320: transforming unit
- 330: identifying unit
- 340: providing unit
- 400: system
- 410: computer-implemented device
- 420: computer program product

## Claims

1. A computer-implemented method (200) for mapping a real-world part to a model in a catalogue, comprising:
receiving (210), by a multimodal large language model, LLM, a query for mapping the part to the model, wherein the request comprises a text and/or a voice sequence and/or an image associated with the part;
transforming (220), by the multimodal LLM, the received query to a textual description of the part;
identifying (230), based on the textual description, a model in the catalogue, onto which the part may be mapped, wherein the identifying compromised comparing the textual description with a respective textual description of the models in the catalogue;
providing (240) information associated with the identified model to a user.

2. The computer-implemented method according to claim 1, wherein the transforming further comprises:
transforming the query, by an embedding LLM, into a vector representation of the query.

3. The computer-implemented method according to one of the claims 1 or 2, wherein the models in the catalogue are represented by entries in a vector database representation and wherein the identifying comprises a k-Nearest Neighbors, kNN, search in the vector database.

4. The computer-implemented method according to claim 3, wherein the identifying comprises identifying a number N, with N ≥ 1, of entries in the vector database based on a similarity score indicative of a similarity of the part and a respective model that exceeds a predetermined threshold.

5. The computer-implemented method according to one of the claims 3 or 4, wherein the vector database comprises key-data pairs, wherein the data is associated with a model description for a model in the catalogue and wherein the respective key is a textual description of the model in the catalogue.

6. The computer-implemented method according to claim 5, wherein the identifying comprises searching a key in the vector database that is equal to and/or similar to the textual description of the part.

7. The computer-implemented method according to one of the claims 1-6, wherein the catalogue comprises a description of each of the models in the catalogue and/or a manual for each of the models in the catalogue.

8. The computer-implemented method according to one of the claims 1-7, further comprising:
requesting further information from the user if no model can be identified in the catalogue and/or if the identified model is associated with a similarity score that is below a predefined threshold, wherein the similarity score is indicative of a similarity of the part and a respective model in the catalogue.

9. The computer-implemented method according to claim 8, wherein the requesting further comprises:
providing a multimodal LLM-based dialogue system to the user, wherein the LLM-based dialogue system is configured to provide part-related questions to the user to obtain further information from the user to describe the part;
requesting the further information by means of the multimodal LLM-based dialogue system.

10. The computer-implemented method according to one of the claims 1-9, wherein the transforming further comprises:
accessing a manual of the part and/or of an apparatus which comprises the part;
deriving further information from the manual which is indicative of a description of the part;
adding the derived further information to the textual description of the part.

11. The computer-implemented method according to one of the claims 1-10, wherein the providing further comprises:
providing a link to the catalogue to the identified model; and/or
providing meta information for the identified model.

12. A computer program product comprising instructions which, when the computer program product is executed by a computer, causes the computer to carry out the steps of the method according to one of the claims 1-11.

13. A computer-implemented device (300) for mapping a real-world part to a model in a catalogue, comprising:
a receiving unit (310) for receiving, by a multimodal large language model, LLM, a query for mapping the part to the model, wherein the request comprises a text and/or a voice sequence and/or an image associated with the part;
a transforming unit (320) for transforming, by the multimodal LLM, the received query to a textual description of the part;
an identifying unit (330) for identifying, based on the textual description, a model in the catalogue onto which the part may be mapped, wherein the identifying comprises comparing the textual description with a respective textual description of the models in the catalogue;
a providing unit (340) for providing information associated with the identified model to a user.

14. The computer-implemented device of claim 13, further comprising:
an execution unit for carrying out the steps of the method according to one of the claims 1-11; and/or
a further execution unit for carrying out the computer program product according to claim 12.

15. A system (500) for mapping a part to a model in a catalogue, comprising:
the computer-implemented device (510) according to one of the claims 13 or 14; and
the computer program product (520) according to claim 12.
